# FASCICULE DE BREVET EUROPEEN

(11) **EP 1 068 004 B1**
(45) Date de publication et mention de la délivrance du brevet: **19.05.2004**
(21) Numéro de dépôt: 99910429.2
(22) Date de dépôt: 25.03.1999
(51) Int. Cl.: B01F 9/00

(54) **MALAXEUR AMELIORE, BOL POUR MALAXER DES PATES A EMPREINTE ET SILICONES DENTAIRES EN VRAC**
VERBESSERTER MISCHER, HALTER ZUM MISCHEN VON DENTALMASSEN UND DENTALABFORMMASSE AUF SILIKONBASIS
IMPROVED MIXING MILL, BOWL FOR MIXING PASTES AND DENTAL SILICON IN BULK

(30) Priorité: 01.04.1998 FR 9804057
(43) Date de publication de la demande: 17.01.2001
(73) Titulaire: Jouvin, Jean-Luc, F-72000 Le Mans (FR)
(72) Inventeur: Jouvin, Jean-Luc, F-72000 Le Mans (FR)
(74) Mandataire: Breese, Pierre
(86) Numéro de dépôt international: PCT/FR1999/000696
(87) Numéro de publication internationale: WO 1999/049961

(56) Documents cités:
- WO-A-92/06777
- DE-A- 2 001 301
- FR-A- 2 718 058

## Description

La présente invention concerne le domaine du malaxage de pâtes à empreintes, notamment de silicones à usage dentaire.

Un malaxeur centrifuge planétaire est habituellement destiné à recevoir au moins un godet comprenant un fond et des parois latérales périphériques de forme générale cylindrique. Il comporte un double-bras mobile entraîné en rotation autour d'un axe principal. Le malaxage a pour but d'homogénéiser la pâte qui prendra après polymérisation la consistance d'une masse élastique sans bulles.

L'art antérieur connaît du document DE 2 001 301, un bol de malaxage réalisé en métal, par exemple, en acier inoxydable ou en aluminium.

Un exemple connu de malaxeur est également décrit dans le brevet français FR2718058 du demandeur.

Le but de l'invention est de remédier à un inconvénient constaté avec les malaxeurs dé l'art antérieur: Le malaxage provoque un échauffement plus ou moins important du ciment dentaire principalement des silicones lourds ou " Putty ". Cet échauffement n'est pas toujours souhaitable, pour des raisons de maintien de la stabilité des ingrédients. En effet, le durcissement et la prise des pâtes à malaxer s'accélère avec l'élévation de la température, et tout échauffement réduit le temps d'utilisation de la pâte avant durcissement. Pour cette raison, il est fréquent que le malaxage soit interrompu avant l'aboutissement de l'homogénéisation de la composition, pour préserver le temps d'utilisation de la composition avant durcissement. Il en résulte un arbitrage insatisfaisant entre la qualité de l'homogénéisation, et le temps d'utilisation de la composition.

Pour remédier à cet inconvénient, l'invention consiste en un malaxeur centrifuge planétaire du type comportant au moins un bol de malaxage métallique, les parois intérieures dudit bol étant enduites d'un revêtement non adhésif pour les pâtes à empreintes dentaires.

Avantageusement, le revêtement non adhésif est du en PTFE commercialisé sous le nom de Téflon (nom commercial).

Le bol de malaxage est de préférence un bol en aluminium ou en un alliage d'aluminium. Un tel bol présente une conductivité thermique supérieure à celle des bols en matière plastique, tout en offrant un poids acceptable.

L'invention concerne selon un exemple non limitatif de réalisation un malaxeur comportant un bol de malaxage réalisé en alliage de faible densité (Titane, Aluminium). Il présente une forme générale cylindrique à section elliptique. L'inertie thermique de la masse d'aluminium constituant le bol permet d'éviter l'élévation de la température.

Avantageusement, ledit bol présente un moyeu central de section circulaire de façon à faciliter la circulation de la pâte à malaxer, contrairement aux bols de l'art antérieur du demandeur qui comportent des moyeux elliptiques, spécialement étudiés pour les alginates qui sont des matériaux plus fluides.

L'invention concerne également un malaxeur pour pâtes à empreintes dentaires comportant un mécanisme d'entraînement planétaire d'un bol de malaxage rotatif autour d'un axe incliné caractérisé en ce que le bol est réalisé en aluminium. Avantageusement, le bol est logé dans une cavité du rotor planétaire.

## Revendications

1. Malaxeur centrifuge planétaire du type comportant au moins un bol pour le malaxage de pâtes à empreintes dentaires, ledit bol étant réalisé en alliage métallique, **caractérisé en ce** les parois internes dudit bol présentent un revêtement non adhésif pour les pâtes à empreintes dentaires.

2. Malaxeur centrifuge planétaire selon la revendication 1, **caractérisé en ce que** le revêtement non adhésif est du PTFE.

3. Malaxeur centrifuge planétaire selon la revendication 1 ou 2, **caractérisé en ce que** ledit bol est réalisé en alliage métallique de faible densité tel qu'un alliage d'aluminium ou de titane.

4. Malaxeur centrifuge planétaire selon l'une quelconque des revendications précédentes, **caractérisé en ce que** ledit bol présente un moyeu central à section circulaire.

## Patentansprüche

1. Zentrifugenmischer mit Zentralrad bestehend aus mindestens einem Anrührbecher zum Anmischen von Abformmassen für Dentalabdrücke, wobei der besagte Becher aus einer metallischen Legierung besteht, dahingehend **gekennzeichnet, dass** die Innenwandungen dieses Bechers mit einer Antihaftbeschichtung versehen sind, an denen die Abformmassen nicht haften.

2. Zentrifugenmischer mit Zentralrad nach Patentanspruch 1, dahingehend **gekennzeichnet, dass** die besagte Antihaftbeschichtung aus PTFE besteht

3. Zentrifugenmischer mit Zentralrad nach Patentanspruch 1 oder 2, dahingehend **gekennzeichnet, dass** der besagte Anrührbecher aus einer metallischen Legierung von geringer Dichte besteht, wie zum Beispiel Aluminium- oder Titanlegierung.

4. Zentrifugenmischer mit Zentralrad nach einem der genannten Patentansprüche, dahingehend **gekennzeichnet, dass** der besagte Anrührbecher eine zentrale Nabe mit rundem Querschnitt aufweist.

## Claims

1. Planetary centrifugal mixer of the type comprising at least one bowl for mixing pastes for dental impressions, said bowl being made of metallic alloy, **characterised in that** the inside walls of said bowl have a non-adhesive coating for pastes for dental impressions.

2. Planetary centrifugal mixer according to claim 1, **characterised in that** the non-adhesive coating is made of PTFE.

3. Planetary centrifugal mixer according to either one or the other of claims 1 or 2, **characterised in that** said bowl is made of a low density metallic alloy such as an alloy of aluminium or of titanium.

4. Planetary centrifugal mixer according to any one of the preceding claims, **characterised in that** said bowl has a central hub with a circular cross-section.
